# EUROPEAN PATENT APPLICATION

(11) **EP 3 726 819 A1**
(43) Date of publication of application: **21.10.2020**
(21) Application number: 18889087.5
(22) Date of filing: 12.11.2018
(51) Int. Cl.: H04M 1/02

(54) **MOBILE TERMINAL AND ITS DISPLAY SCREEN ASSEMBLY THEREOF**

(30) Priority: 12.12.2017 CN 201711322950; 12.12.2017 CN 201721743614 U
(71) Applicant: GUANGDONG OPPO MOBILE TELECOMMUNICATIONS CORP., LTD., Wusha, Chang'an Dongguan, Guangdong 523860 (CN)
(72) Inventor: CHENG, Jiao, Dongguan, Guangdong 523860 (CN)
(74) Representative: Mewburn Ellis LLP
(86) International application number: PCT/CN2018/114959
(87) International publication number: WO 2019/114475

(57) **Abstract**

A display assembly (200) is provided. The display assembly (200) is configured to be coupled with a rear casing (100) of a mobile terminal (10). The display assembly (200) includes a screen (210) and a cover plate (220) arranged on the screen. The cover plate (220) includes a main body portion (221) and an edge portion (223). The main body portion (221) has a first surface (2211) and a second surface (2213). The edge portion (223) is bent toward the first surface (2211) and above the first surface (2211). The edge portion (223) and the first surface (2211) define a receiving groove (300), and the screen (210) is at least partially received in the receiving groove (300). One side of the main body portion (221) facing the screen (210) defines a countersink (2215), the first surface (22111) is a bottom wall of the countersink (2215), and the screen (210) is at least partially received in the countersink (2215). An orthographic projection of the screen (210) on a main plane coincides with an orthographic projection of the countersink (2215) on the main plane, where the main plane is a plane perpendicular to a thickness direction of the mobile terminal (10).

## Description

### TECHNICAL FIELD

This disclosure relates to the technical field of mobile terminals.

### BACKGROUND

Generally, a mobile terminal includes a cover plate and a screen, and the cover plate is arranged on the screen. During assembling of the cover plate and the screen, it is difficult to realize alignment between the screen and the cover plate.

### SUMMARY

Implementations aim to provide a mobile terminal and a display assembly thereof.

A display assembly is provided. The display assembly is configured to be coupled with a rear casing of a mobile terminal. The display assembly includes a screen and a cover plate. The cover plate is arranged on the screen and includes a main body portion and an edge portion. The edge portion is disposed on an edge of the main body portion and coupled with the main body portion. The main body portion has a first surface facing the rear casing and a second surface away from the rear casing, and the edge portion is bent toward the first surface and above the first surface. The edge portion and the first surface define a receiving groove, the screen is at least partially received in the receiving groove, and the edge portion is configured to be coupled with the rear casing. One side of the main body portion facing the screen defines a countersink, the first surface is a bottom wall of the countersink, and the screen is at least partially received in the countersink. An orthographic projection of the screen on a main plane coincides with an orthographic projection of the countersink on the main plane, and the main plane is a plane perpendicular to a thickness direction of the mobile terminal.

In the mobile terminal and the display assembly, the cover plate of the display assembly includes the main body portion and the edge portion. Since the edge portion is bent toward the rear casing and above the first surface, such that the receiving groove is defined, where the receiving groove provides a space for accommodating the screen. As such, the size of the rear casing in the thickness direction of the mobile terminal may be reduced, and therefore the mobile terminal may be simple. In addition, the side of the main body portion facing the screen defines the countersink, the screen is at least partially received in the countersink, and a shape of the countersink matches that of the screen, which can facilitate the positioning of the screen on the cover plate, and further facilitate the alignment between the screen and the cover plate.

### BRIEF DESCRIPTION OF THE DRAWINGS

In order to describe technical solutions of implementations or the related art more clearly, the following will give a brief description of accompanying drawings used for describing the implementations or the related art. Apparently, the accompanying drawings described below merely illustrate some implementations. Those of ordinary skill in the art can also obtain other accompanying drawings based on the accompanying drawings described below without creative efforts.
FIG. 1 is a perspective view of a mobile terminal according to implementations.
FIG. 2 is a front view of the mobile terminal in FIG. 1.
FIG. 3 is a cross-sectional view of the mobile terminal illustrated in FIG. 2 according to implementations, taken along line A-A.
FIG. 4 is an enlarged view of part B of the mobile terminal in FIG. 3.
FIG. 5 is a cross-sectional view of the mobile terminal illustrated in FIG. 2 according to other implementations, taken along line A-A.
FIG. 6 is an enlarged view of part C of the mobile terminal in FIG. 5.

### DETAILED DESCRIPTION

In order to enable those skilled in the art to better understand solutions, technical solutions embodied in implementations will be described in a clear and comprehensive manner in conjunction with the accompanying drawings. The accompanying drawings described below merely illustrate some implementations. However, the disclosure can be implemented in many different forms and is not limited to the implementations described herein. Instead, these implementations are provided to better understand the disclosure.

"Terminal device" used herein includes, but is not limited to, a device configured to be coupled with other devices via any one or more of the connection modes described in the following and configured to receive and/or transmit communication signals. The connection modes include: (1) coupling via wired circuit connection such as a public switched telephone network (PSTN), a digital subscriber line (DSL), a digital cable, or direct cable connection; (2) coupling via a wireless interface such as a cellular network, a wireless local area network (WLAN), a digital television network such as a digital video broadcasting-H (DVB-H) network, a satellite network, or an amplitude modulation-frequency modulation (AM-FM) broad transmitter.

The terminal device configured to communicate with other devices via a wireless interface may be referred to as a "terminal". Examples of the mobile terminal include, but are not limited to, the following electronic devices: (1) a satellite phone or a cellular phone; (2) a personal communications system (PCS) terminal that has cellular radiotelephone and data processing, fax, and data communication capabilities; (3) a radiotelephone, a pager, Internet/Intranet access, a web browser, a notepad, a calendar, a personal digital assistant (PDA) equipped with a Global Positioning System (GPS) receiver; (4) a conventional laptop and/or palm-type receiver; (5) a conventional laptop and/or palm-type radiotelephone transceiver, or the like.

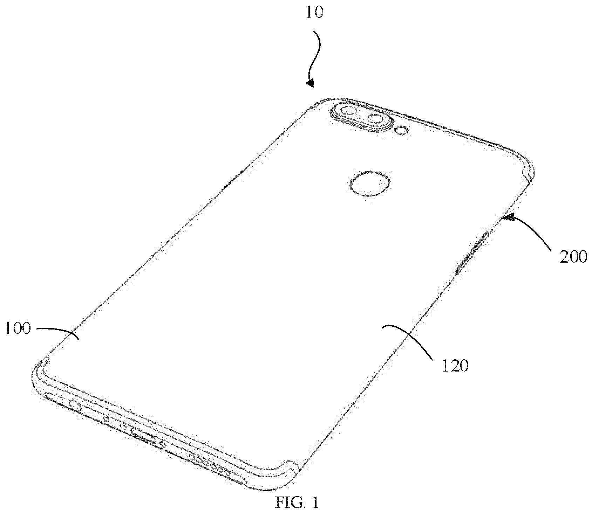

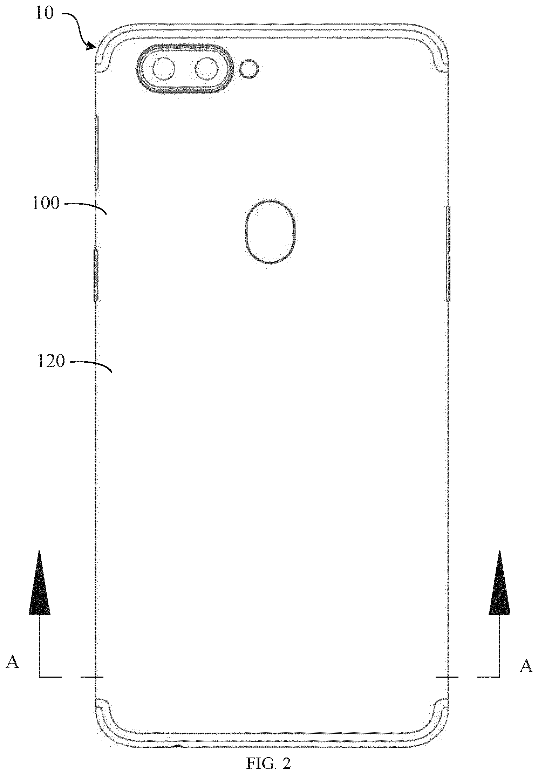

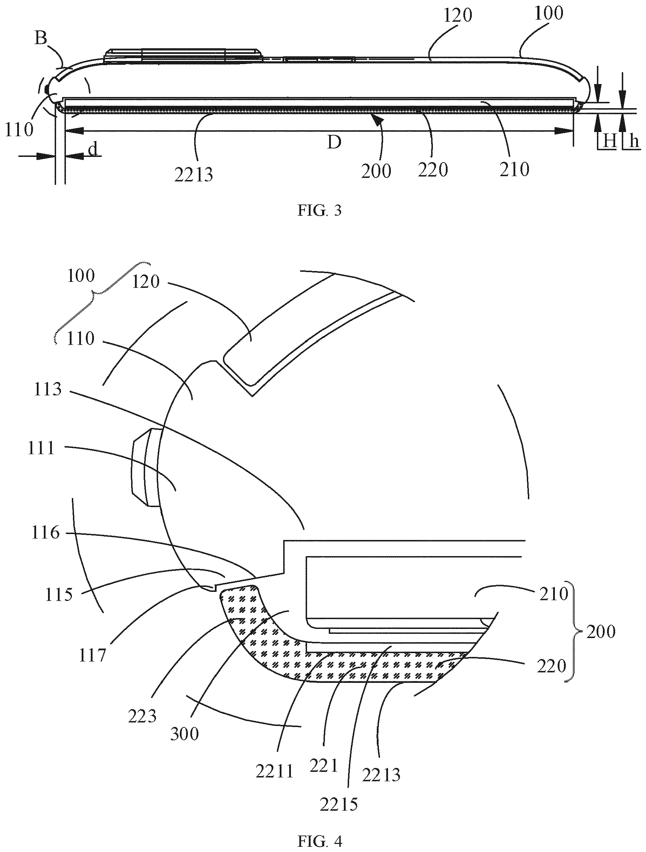

Referring to FIG. 1 and FIG. 2, in at least one implementation, a mobile terminal 10 is a smart phone. The mobile terminal 10 includes a rear casing 100 and a display assembly 200. The rear casing 100 covers one side of the display assembly 200 and is coupled with the display assembly 200. The rear casing 100 can support and protect the display assembly 200. In at least one implementation, the rear casing 100 is substantially rounded rectangular. The rear casing 100 is convex toward a direction away from the display assembly 200. A receiving space is defined between the rear casing 100 and the display assembly 200, such that a battery, a main board, and other components of the mobile terminal 10 can be received in the receiving space. As illustrated in FIG. 3 and FIG. 4, in at least one implementation, the rear casing 100 includes a middle frame 110 and a battery cover 120 (i.e., a cover covering the battery of the mobile terminal 10). The display assembly 200 and the battery cover 120 are respectively coupled with the middle frame 110, and the middle frame 110 is disposed between the display assembly 200 and the battery cover 120.

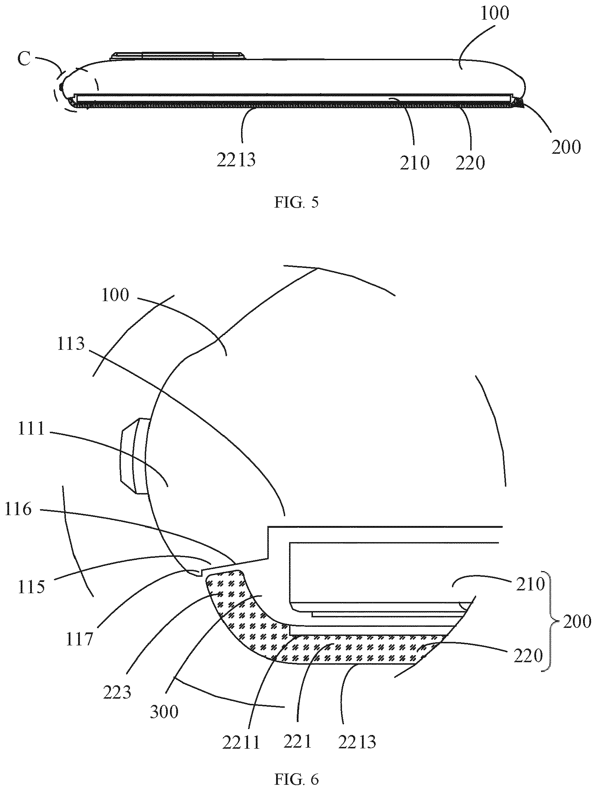

In one example, the middle frame 110 has a substantially rectangular frame shape. The middle frame 110 is on the periphery of the display assembly 200. An inner side of the middle frame 110 may be provided with a support structure. As one example, the middle frame 110 is made from a metal material, such as an aluminum alloy. A complex support structure can be formed on the middle frame 110 through an injection molding process. The battery, the main board, and other components of the mobile terminal 10 can be secured to the support structure. As another example, the middle frame 110 is made from other materials such as stainless steel or ceramic. In at least one implementation, the battery cover 120 is made of glass. The glass may be colored or colorless, or the glass may be transparent or non-transparent. In at least one implementation, a difference ΔE between a color value of an outer surface of the middle frame 110 and a color value of an outer surface of the battery cover 120 is larger than 2.5. When the difference ΔE between the color value of the outer surface of the middle frame 110 and the color value of the outer surface of the battery cover 120 is larger than 2.5, the outer surface of the middle frame 110 and the outer surface of the battery cover 120 may have a significant color difference visually, and thus the appearance of the mobile terminal 10 may be beautified. As illustrated in FIG. 5 and FIG. 6, in at least one implementation, the battery cover 120 and the middle frame 110 are integrally formed. The battery cover 120 and the middle frame 110 are generally made from aluminum alloy, stainless steel, ceramic, or glass. With such structural design, it is beneficial for processing and molding of the rear casing 100, and the appearance of the mobile terminal 10 may be simple and unified.

As illustrated in FIG. 3 and FIG. 4, in at least one implementation, the display assembly 200 includes a screen 210 and a cover plate 220. The screen 210 is disposed on one side of the cover plate 220 facing the rear casing 100. The cover plate 220 is arranged on the screen 210 and is coupled with the rear casing 100. The screen 210 can display information and provide an interactive interface for a user. In at least one implementation, the cover plate 220 includes a main body portion 221 and at least one edge portion 223. The edge portion 223 is disposed on an edge of the main body portion 221 and coupled with the main body portion 221. In at least one implementation, the main body portion 221 and the edge portion 223 are made of glass and are integrally formed. In addition, the main body portion 221 and the edge portion 223 have high light transmittance. In one example, the main body portion 221 has a substantially rectangular block shape. The at least one edge portion 223 is arranged on two sides in a width direction of the rectangle (i.e., main body portion 221), that is, the at least one edge portion 223 is coupled between two long edges of the rectangle. In at least one implementation, the main body portion 221 has a first surface 2211 facing the rear casing 100 and a second surface 2213 away from the rear casing 100. The edge portion 223 is bent toward the first surface 2211 and above the first surface 2211. The edge portion 223 and the first surface 2211 define a receiving groove 300. The screen 210 is at least partially received in the receiving groove 300. The screen 210 is attached to the first surface 2211, and the edge portion 223 is coupled with the middle frame 110.

As illustrated in FIG. 4, in at least one implementation, one side of the main body portion 221 facing the screen 210 defines a countersink 2215. The first surface 2211 is a bottom wall of the countersink 2215, and the screen 210 is at least partially received in the countersink 2215. In one example, a shape of the countersink 2215 matches that of the screen 210, that is, a length of the countersink 2215 is equal to that of the screen 210, and a width of the countersink 2215 is equal to that of the screen 210. The screen 210 can be inserted in the countersink 2215, and the screen 210 may be attached to the bottom wall of the countersink 2215. Further, a plane perpendicular to a thickness direction of the mobile terminal 10 is set as a main plane, and an orthographic projection of the screen 210 on the main plane coincides with an orthographic projection of the countersink 2215 on the main plane. With such structural design, it is possible to achieve a high precision coupling between the screen 210 and the countersink 2215. In addition, the screen 210 is inserted in the countersink 2215, which facilities the coupling and alignment between the screen 210 and the cover plate 220, thereby improving the accuracy and efficiency of the coupling of the screen 210 and the cover plate 220.

It will be appreciated that, a dispensing layer (not shown) may be provided between the screen 210 and the bottom wall of the countersink 2215. The dispensing layer is disposed on the periphery of the screen 210, for example, the dispensing layer is disposed on a non-display region of the screen 210. The screen 210 can be firmly attached to the cover plate 220 via the dispensing layer. In addition, the width of the countersink 2215 may be slightly larger than that of the screen 210, and correspondingly, the length of the countersink 2215 may be slightly larger than that of the screen 210. For instance, a ratio of a difference value between the width of the countersink 2215 and the width of the screen 210 to the width of the screen 210 can be smaller than 2%, and a ratio of a difference value between the length of the countersink 2215 and the length of the screen 210 to the length of the screen 210 can be smaller than 2%. Even such machining error exists, the orthographic projection of the screen 210 on the main plane can be deemed to coincide with that of the countersink 2215 on the main plane, and the countersink 2215 can also be considered to meet the requirements of the machining, thereby improving the alignment between the screen 210 and the cover plate 220.

In at least one implementation, the first surface 2211 is a plane. The screen 210 is a rigid screen. The rigid screen is not easy to be bent. The screen 210 is attached to the first surface 2211. Since the first surface 2211 of the main body portion 221 is a plane, there is no need to adopt a high cost flexible screen for the mobile terminal 10. A good appearance can be obtained and the cost of the mobile terminal 10 may be reduced when the mobile terminal 10 is provided with a relatively low cost rigid screen, such as a liquid crystal display (LCD). Since the first surface 2211 attached to the screen 210 is a plane, it is possible to avoid a bent stress on a surface of the screen 210 attached to the cover plate 220, and therefore the screen 210 can be firmly attached to the cover plate 220. In addition, it is further possible to avoid that the screen 210 is unfirmly attached to the cover plate 220 due to the bent stress on the surface of the flexible screen if the flexible screen is bent to be fitted on the cover plate 220.

As illustrated in FIG. 4, as one example, the second surface 2213 is a plane, and the second surface 2213 is parallel to the first surface 2211. As another example, the second surface 2213 is a curved surface, such as an arc-shaped surface. The mobile terminal 10 may have a curved surface display effect and the appearance of the mobile terminal 10 can be enhanced under a condition that the second surface 2213 is designed as an arc-shaped surface. In one example, by setting a plane perpendicular to a length direction of the mobile terminal 10, a shape of the edge portion 223 bent toward the screen 210 is substantially arc-shaped, that is, a surface of the edge portion 223 facing an interior of the mobile terminal 10 and a surface of the edge portion 223 facing an exterior of the mobile terminal 10 are both arc-shaped surfaces. When the at least one edge portion 223 is arranged on the side edges of the screen 210 and is coupled with the middle frame 110 of the rear casing 100, the mobile terminal 10 can have a good appearance. On the other hand, since with the curved edge portion 223 lights can be refracted and reflected, the middle frame 110 may be narrow visually, and the non-display region on the periphery of the screen 210 may also have a narrow black-edge visually.

In at least one implementation, a ratio of a width of an orthographic projection of the edge portion 223 on the main plane to a width of the orthographic projection of the screen 210 on the main plane is smaller than 0.03, and a ratio of a maximum distance between the edge portion 223 and the second surface 2213 to a maximum thickness of the main body portion 221 is smaller than 6. As illustrated in FIG. 3, the second surface 2213 of the cover plate 220 is a plane, the second surface 2213 can be regarded as the main plane, and the ratio of the width of the orthographic projection of the edge portion 223 on the second surface 2213 to the width of the orthographic projection of the screen 210 on the second surface 2213 is smaller than 0.03. For instance, as illustrated in FIG. 3, the width of the orthographic projection of the screen 210 on the second surface 2213 is *D*, the width of the orthographic projection of the edge portion 223 on the second surface 2213 is *d*, and *d*/*D*< 0.03. Furthermore, in FIG. 3, the maximum distance between the edge portion 223 and the second surface 2213 is *H*, the maximum thickness of the main body portion 221 is *h*, and *H*/*h <* 6. With such configuration, the edge portion 223 has a large curvature, and a gap between an inner surface of the edge portion 223 and a side surface of the screen 210 facing the edge portion 223 is narrow. As such, the middle frame 110 may be narrow visually, and the non-display region on the periphery of the screen 210 may also has a narrow black-edge visually.

As one example, the edge portion 223 curved toward the screen 210 is obtained through a hot-press molding. As another example, the edge portion 223 curved toward the screen 210 is obtained through a computer numerical control (CNC) process. In one example, the gap between the inner surface of the edge portion 223 and the side surface of the screen 210 facing the edge portion 223 may be provided with an adhesive layer (not shown), where the adhesive layer may be formed by transparent glue. The screen 210 can be firmly attached to the cover plate 220 via the adhesive layer. In at least one implementation, the orthographic projection of the screen 210 on the main plane is within that of the second surface 2213 on the main plane. In the above design, the second surface 2213 fully covers the screen 210. When the screen 210 displays information, with structural consistency of the second surface 2213, a consistent display effect can be presented when lights from the screen 210 passes through the second surface 2213, and discontinuous display on a joint between the main body portion 221 and the edge portion 223 due to different curvatures can be avoided, and thus user experience is not affected.

In the mobile terminal 10 and the display assembly 200, the cover plate 220 of the display assembly 200 includes the main body portion 221 and the edge portion 223. The edge portion 223 is bent toward the rear casing 100 and is coupled with the rear casing 100. The screen 210 is attached to the first surface 2211 of the main body portion 221. The edge portion 223 is bent toward the rear casing 100 and above the first surface 2211, such that the receiving groove 300 is defined, where the receiving groove 300 provides a space for accommodating the screen 210. As such, the size of the rear casing 100 in the thickness direction of the mobile terminal 10 may be reduced, and therefore the mobile terminal 10 may be simple. In addition, the side of the main body portion 221 facing the screen 210 defines the countersink 2215, and the screen 210 can be inserted in the countersink 2215, which facilitates the coupling and alignment between the screen 210 and the cover plate 220, so as to improve the accuracy and efficiency of the coupling of the screen 210 and the cover plate 220.

As illustrated in FIG. 5 and FIG. 6, in at least one implementation, the middle frame 110 includes a body 111 and a first lug 113 integrally formed with the body 111. One side of the screen 210 away from the cover plate 220 abuts against the first lug 113. In one example, a width of the first lug 113 is equivalent to that of the screen 210. The screen 210 is disposed on the first lug 113, and an adhesive layer (not shown) is provided between the screen 210 and the first lug 113 to enable that the screen 210 is coupled with the middle frame 110. The first lug 113 facilitates the positioning of the screen 210 on the middle frame 110 and the coupling between the screen 210 and the middle frame 110. As one example, the first lug 113 is continuous on the body 111, the first lug 113 is on the periphery of the screen 210, and an orthographic projection of the first lug 113 on the main plane is rounded rectangular. When the first lug 113 and the screen 210 are provided with the adhesive layer disposed there-between, it is beneficial to the firmly coupling of the screen 210 and the middle frame 110, such that the screen 210 and the middle frame 110 are attached seamlessly, thereby improving the waterproof performance of the mobile terminal 10. As another example, there are multiple first lugs 113 discontinuously arranged on the body 111, that is, the first lugs 113 can be spaced apart from each other. In this case, the first lugs 113 may also be conducive to the coupling of the screen 210 and the middle frame 110.

In at least one implementation, the middle frame 110 further includes a second lug 115. The second lug 115 is integrally formed with the body 111. The second lug 115 has an abutting surface 116. The abutting surface 116 is a plane, and an angle defined between the abutting surface 116 and the main plane is smaller than 45 degrees. The edge portion 223 abuts on the abutting surface 116. As illustrated in FIG. 6, the second lug 115 extends from the first lug 133 and is close to the cover plate 220, and the abutting surface 116 is inclined from the exterior to the interior of the mobile terminal 10. In FIG. 6, the mobile terminal 10 is placed horizontally, the abutting surface 116 on the left after being subjected to clockwise rotation with an angle less than 45 degrees can be overlapped with a horizontal plane, and the abutting surfaces 116 on the right after being subjected to anticlockwise rotation with an angle less than 45 degrees can be overlapped with the horizontal plane. In one example, an adhesive layer is provided on the abutting surface 116. The edge portion 223 can be coupled with the middle frame 110 via the adhesive layer. With the above configuration, when the cover plate 220 is coupled with the middle frame 110, a supporting force of the abutting surface 116 to the cover plate 220 has a component force distributed along a width direction of the cover plate 220, where the component force points to the interior of the mobile terminal 10. The component force enables the at least one edge portion 223 on the two sides of the main body portion 221 to be approached inwardly, so that the at least one edge portion 223 on the two sides of the main body portion 221 can be prevented from being stretched outwardly, thereby ensuring the reliability of the coupling of the cover plate 220 and the middle frame 110.

As one example, the second lug 115 is continuous on the body 111, the second lug 115 is on the periphery of the first lug 113, and an orthographic projection of the second lug 115 on the main plane is rounded rectangular. When the second lug 115 and the cover plate 220 are provided with an adhesive layer disposed there-between, it is beneficial to the firmly coupling of the cover plate 220 and the middle frame 110, such that the cover plate 220 and the middle frame 110 are attached seamlessly, thereby improving the waterproof performance of the mobile terminal 10. As another example, there are multiple second lugs 115 discontinuously arranged on the body 111, that is, the second lugs 115 may be spaced apart from each other. In this case, the second lugs 115 may also be conducive to the coupling of the cover plate 220 and the middle frame 110.

In at least one implementation, the middle frame 110 further includes a third lug 117. The third lug 117 is integrally formed with the body 111. The third lug 117 is arranged on one side of the edge portion 223 away from the screen 210, and the edge portion 223 abuts against the third lug 117. In FIG. 6, the third lug 117 extends from the second lug 115 and is close to the second surface 2213. The third lug 117 abuts against the edge portion 223 and forms a half-wrapped structure to an edge of the edge portion 223, which can facilitate the positioning of the cover plate 220 on the rear casing 100 and have a protection effect on the cover plate 220, thereby preventing the edge of the cover plate 220 from being damaged by accidental collision. As one example, the third lug 117 is continuous on the body 111, the third lug 117 is on the periphery of the second lug 115, and an orthographic projection of the third lug 117 on the main plane is rounded rectangular. The third lug 117 is beneficial to the firmly coupling of the cover plate 220 and the middle frame 110. As another example, there are multiple third lugs 117 discontinuously arranged on the body 111, that is, the third lugs 117 may be spaced apart from each other. In this case, the third lugs 117 can also be conducive to the coupling of the cover plate 220 and the middle frame 110. In addition, an outer side of the middle frame 110 extending along the thickness direction of the mobile terminal 10 is an arc-shaped surface, and curvature of the arc-shaped surface is slightly larger than that of the edge portion 223, such that side surfaces of the mobile terminal 10 may be curved surfaces, which is beneficial to beautifying the mobile terminal 10 and enhancing the structural integrity of the mobile terminal 10.

The technical features of the above-described implementations may be arbitrarily combined. For the sake of brevity of description, not every combination of the technical features in the above implementations is described. However, as long as there is no contradiction of the combinations between the technical features, which shall fall within the protection scope.

The above-mentioned implementations merely some implementations. The specific and detailed illustration of the above implementations shall not be construed as limiting the scope of the claims. It should be noted that for a person skilled in the art, a number of variations and modifications may be obtained without departing from the spirit and scope. Therefore, the scope should be determined by the appended claims.

## Claims

1. A display assembly configured to be coupled with a rear casing of a mobile terminal and comprising:
a screen; and
a cover plate arranged on the screen and comprising a main body portion and an edge portion, wherein the edge portion is disposed on an edge of the main body portion and coupled with the main body portion, the main body portion has a first surface facing the rear casing and a second surface away from the rear casing, the edge portion is bent toward the first surface and above the first surface, the edge portion and the first surface define a receiving groove, the screen is at least partially received in the receiving groove, and the edge portion is configured to be coupled with the rear casing, wherein one side of the main body portion facing the screen defines a countersink, the first surface is a bottom wall of the countersink, and the screen is at least partially received in the countersink, wherein an orthographic projection of the screen on a main plane coincides with an orthographic projection of the countersink on the main plane, wherein the main plane is a plane perpendicular to a thickness direction of the mobile terminal.

2. The display assembly of claim 1, wherein the first surface is a plane, and the screen is attached to the first surface.

3. The display assembly of claim 1, wherein a ratio of a width of an orthographic projection of the edge portion on the main plane to a width of the orthographic projection of the screen on the main plane is smaller than 0.03, and a ratio of a maximum distance between the edge portion and the second surface to a maximum thickness of the main body portion is smaller than 6.

4. The display assembly of claim 3, wherein the second surface is a plane, and the orthographic projection of the screen on the main plane is within an orthographic projection of the second surface on the main plane.

5. The display assembly of claim 3, wherein the second surface is an arc-shaped surface, and the orthographic projection of the screen on the main plane is within an orthographic projection of the second surface on the main plane.

6. The display assembly of claim 1, further comprising an adhesive layer sandwiched between the edge portion and the screen, and the screen is coupled with the edge portion via the adhesive layer.

7. The display assembly of claim 1, wherein the cover plate is made of glass, and the screen is a Liquid Crystal Display (LCD).

8. A mobile terminal, comprising:
the display assembly of any of claims 1 to 7; and
a rear casing coupled with the edge portion, wherein the screen is disposed between the rear casing and the cover plate.

9. The mobile terminal of claim 8, wherein the rear casing comprises a middle frame and a battery cover, wherein the main body portion and the battery cover are respectively coupled with the middle frame, and the middle frame is disposed between the battery cover and the cover plate.

10. The mobile terminal of claim 9, wherein the middle frame is made from an aluminum alloy, stainless steel, or ceramic.

11. The mobile terminal of claim 9, wherein the battery cover is made of glass.

12. The mobile terminal of claim 11, wherein the battery cover is transparent or non-transparent.

13. The mobile terminal of claim 9, wherein a difference ΔE between a color value of an outer surface of the middle frame and a color value of an outer surface of the battery cover is larger than 2.5.

14. The mobile terminal of claim 9, wherein the middle frame is integrally formed with the battery cover.

15. The mobile terminal of claim 9, wherein the middle frame comprises a body and a first lug integrally formed with the body, and one side of the screen away from the cover plate abuts against the first lug.

16. The mobile terminal of claim 15, wherein the first lug is on the periphery of the screen, and an orthographic projection of the first lug on the main plane has a rounded rectangular shape.

17. The mobile terminal of claim 15, wherein the middle frame further comprises a second lug integrally formed with the body, and the second lug has an abutting surface, wherein the abutting surface is a plane, and an angle defined between the abutting surface and the main plane is smaller than 45 degrees.

18. The mobile terminal of claim 17, wherein the second lug is on the periphery of the first lug, and an orthographic projection of the second lug on the main plane has a rounded rectangular shape.

19. The mobile terminal of claim 17, wherein the middle frame further comprises a third lug integrally formed with the body, the third lug is on one side of the edge portion away from the screen, and the edge portion abuts against the third lug.

20. The mobile terminal of claim 19, wherein the third lug is on the periphery of the cover plate, and an orthographic projection of the third lug on the main plane has a rounded rectangular shape.
